# EUROPÄISCHE PATENTSCHRIFT

(11) **EP 3 096 050 B1**
(45) Veröffentlichungstag und Bekanntmachung des Hinweises auf die Patenterteilung: **21.02.2018**
(21) Anmeldenummer: 15201825.5
(22) Anmeldetag: 22.12.2015
(51) Int. Cl.: F16K 3/30, F16K 3/314, F16K 25/00

(54) **ABSPERRELEMENT**
BLOCKING ELEMENT
ÉLEMENT DE BLOCAGE

(30) Priorität: 19.05.2015 DE 102015107840
(43) Veröffentlichungstag der Anmeldung: 23.11.2016
(73) Patentinhaber: VAG-Armaturen GmbH, 68305 Mannheim (DE)
(72) Erfinder: Hauner, Ivo, 69602 Ratiskovice (CZ)
(74) Vertreter: Charrier Rapp & Liebau

(56) Entgegenhaltungen:
- WO-A1-2013/010546
- WO-A1-2013/144276
- AT-A4- 509 083
- DE-B- 1 203 071
- US-A- 5 074 526

## Beschreibung

Die Erfindung betrifft ein Absperrelement für eine Absperrarmatur nach dem Oberbegriff des Anspruchs 1.

Ein derartiges Absperrelement ist in der WO 2013/144276 A1 offenbart. Bei diesem bekannten Absperrelement ist ein aus Gusseisen bestehender Grundkörper mit einer allseitigen Ummantelung in Form einer Gummierung (Elastomer) versehen. Die Ummantelung ist nicht nur im Außenbereich des Grundkörpers vorgesehen, sondern auch im Bereich des Gewindeeinsatzes und bildet dort eine dünne Schicht, die den Gewindeeinsatz mit dem Grundkörper verbindet. Durch die von der Ummantelung gebildete dünne Schicht ist der Gewindeeinsatz flexibel, aber spielfrei und formschlüssig im Grundkörper gehalten.

Da sich die Gewindemutter bei einem derartigen Absperrelement jedoch relativ zum Grundkörper bewegen kann und auch einer nicht unerheblichen Belastung ausgesetzt ist, kann die am Übergang zum Grundkörper in der Regel relativ dünne Ummantelung durch den Gewindeeinsatz besonders bei längerem Gebrauch beschädigt werden, was dann zu Korrosion am Grundkörper und dadurch bedingten Schäden führen kann.

Aufgabe der Erfindung ist es, ein Absperrelement der eingangs genannten Art zu schaffen, das einen verbesserten Schutz gegen Korrosionsschäden aufweist.

Diese Aufgabe wird durch ein Absperrelement mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Absperrelement ist ein vorzugsweise aus Gusseisen oder einem anderen Metall bestehender Grundkörper ebenfalls von einer vorzugsweise aus einem Elastomer bestehenden Ummantelung umgeben. Zwischen dem Grundkörper und der innerhalb einer Aufnahme des Grundkörpers angeordneten Gewindemutter ist ein in die Ummantelung eingebettetes Einlegeteil aus einem verschleißbeständigen Material angeordnet. Dadurch kann vermieden werden, dass die Gewindemutter in direkten Kontakt mit der Ummantelung gelangt und diese z.B. durch Reibung oder eine andere Belastung beschädigt. Die Gewindemutter gelangt vielmehr zur Anlage mit dem aus verschleißfesten Material bestehenden Einlegeteil, wodurch eine durch die Relativbewegung der Gewindemutter gegenüber dem Grundkörper bedingte Beschädigung der Ummantelung vermieden und der Grundkörper besser vor Korrosion geschützt werden kann.

In einer besonders zweckmäßigen Ausführung ist das Einlegeteil an der Unterseite der Aufnahme angeordnet und weist eine obere Auflagefläche zur Anlage einer unteren Auflagefläche der Gewindemutter auf. Auch an der Oberseite der Aufnahme kann ein entsprechendes Einlegeteil vorgesehen sein.

Das Einlegeteil kann in eine entsprechende Vertiefung der Ummantelung eingelegt, eingeklebt, in die Ummantelung eingegossen oder auf andere geeignete Weise fest mit der Ummantelung verbunden sein.

Für den Durchgang einer mit der Gewindemutter zusammenwirkenden Gewindespindel weist das Einlegeteil ein zu einer Durchgangsöffnung des Grundkörpers koaxiales Durchgangsloch auf.

Das Einlegeteil ist zweckmäßigerweise aus einem verschleißfesten Kunststoff, vorzugsweise aus einem glasfaserverstärkten Polyamid, hergestellt und ist somit auch vor Korrosion geschützt.

Der Grundkörper weist in einer weiteren zweckmäßigen Ausführung seitlich vorstehende Führungsansätze mit darauf angeordneten Führungsschuhen auf. Durch die Führungsschuhe werden ebenfalls mit einer Ummantelung versehenen Führungsansätze vor Verschleiß geschützt. Die Führungsschuhe sind vorzugsweise ebenfalls aus einem verschleiß- und korrosionsbeständigen Kunststoff hergestellt.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Absperrelement einer Absperrarmatur in einer zum Teil geschnittenen Perspektivansicht und
- **Figur 2**: das Absperrelement von Figur 1 in einer Explosionsdarstellung.

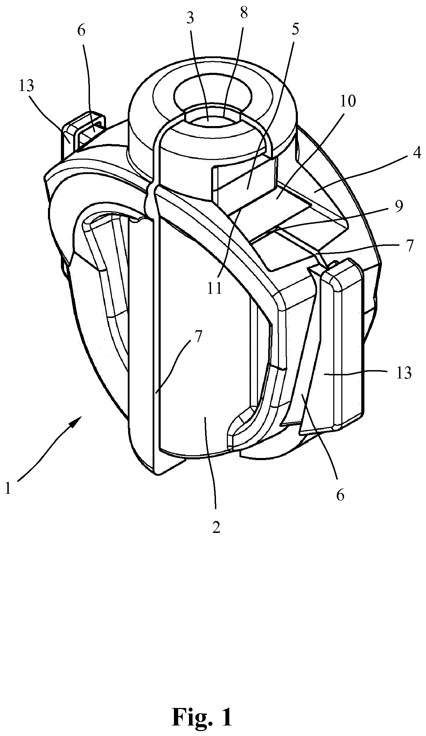

In Figur 1 ist ein als Absperrkeil ausgebildetes Absperrelement 1 einer an sich bekannten und daher nicht dargestellten Absperrarmatur in einer zum Teil geschnittenen Perspektivansicht gezeigt. Das als Absperrkeil ausgebildete Absperrelement 1 ist zur verschiebbaren Führung innerhalb eines mit einer Durchgangsöffnung versehenen Gehäuses der nicht gezeigten Absperrarmatur ausgeführt und ist innerhalb des Gehäuses über eine ebenfalls nicht dargestellte Gewindespindel zwischen einer abgesenkten Schließstellung und einer angehobenen Öffnungsstellung verschiebbar.

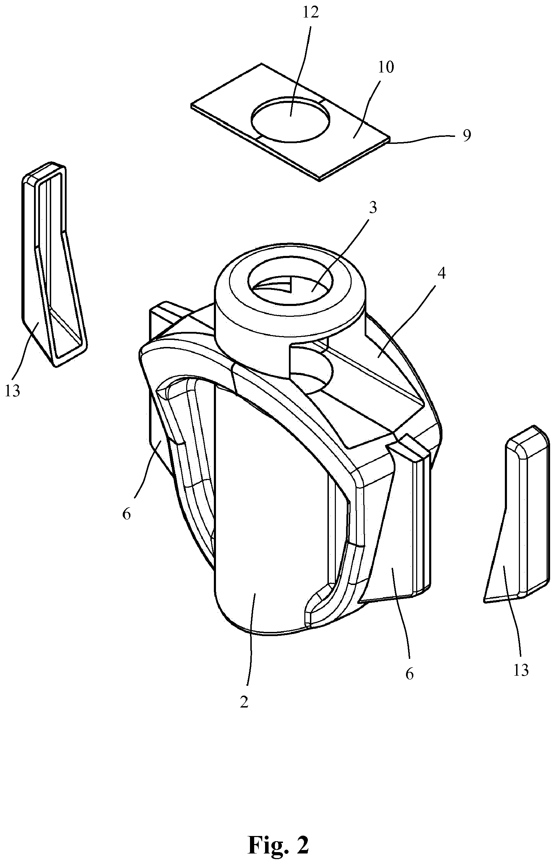

Das in Figur 1 zum Teil geschnitten dargestellte Absperrelement 1 enthält einen in Figur 2 gesondert dargestellten Grundkörper 2, der eine in Verschieberichtung des Absperrelements 1 verlaufende, durchgehende Öffnung 3 für die nicht dargestellte Gewindespindel und eine obere Aufnahme 4 für eine in Figur 1 dargestellte Gewindemutter 5 enthält. Die Aufnahme 4 für die Gewindemutter 5 ist als quer zur Öffnung 3 verlaufender Durchgang ausgeführt. Innerhalb der Aufnahme 4 wird die Gewindemutter 5 in Axialrichtung gesichert gehalten. Der vorzugsweise aus Gusseisen oder einem anderen Metall bestehende Grundkörper 2 weist außerdem an seinen gegenüberliegenden Seiten zwei nach außen vorstehende Führungsansätze 6 zur verschiebbaren Führung innerhalb zweier entsprechender Führungsnuten im Gehäuse der Absperrarmatur auf.

Wie aus Figur 1 hervorgeht, ist der Grundkörper 2 von einer aus einem Elastomer bestehenden Umhüllung 7 umgeben. In die zur Seite offene Aufnahme 4 kann die mit einem Innengewinde 8 versehene Gewindemutter 5 seitlich eingeschoben werden. An der Unterseite der Aufnahme 4 ist ein in die Ummantelung 7 eingebettetes Einlageteil 9 aus einem verschleißbeständigen Material angeordnet. Das vorzugsweise aus einem verschleißbeständigen Kunststoff bestehende Einlegeteil 9 ist in die Ummantelung 7 eingegossen. Es kann aber auch in eine Vertiefung der Ummantelung 7 eingelegt, eingeklebt oder auf andere geeignete Weise fest mit der Ummantelung 7 verbunden sein. Das an der Unterseite der Aufnahme 4 angeordnete Einlegeteil 9 weist eine obere Auflagefläche 10 zur Anlage einer unteren Anlagefläche 11 der Gewindemutter 5 auf. Gemäß Figur 2 enthält das Einlegeteil 9 für den Durchgang der Gewindespindel außerdem ein zur Durchgangsöffnung 3 des Grundkörpers 2 koaxiales Durchgangsloch 12.

Auf den Führungsansätzen 6 sind als Abdeckungen ausgebildete Führungsschuhe 13 angeordnet. Die vorzugsweise aus einem verschleiß- und korrosionsbeständigen Material, wie z.B. Kunststoff, bestehenden Führungsschuhe 13 sind auf die Führungsansätze 6 aufgesteckt und können bei Bedarf ausgewechselt werden.

## Patentansprüche

1. Absperrelement (1) für eine Absperrarmatur mit einem Grundkörper (2), einer den Grundkörper (2) umgebenden Ummantelung (7) und einer in einer Aufnahme (4) des Grundkörpers (2) angeordneten Gewindemutter (5), **dadurch gekennzeichnet, dass** zwischen dem Grundkörper (2) und der Gewindemutter (5) ein in die Ummantelung (7) eingebettetes Einlegeteil (9) aus einem verschleißbeständigen Material angeordnet ist.

2. Absperrelement (1) nach Anspruch 1, **dadurch gekennzeichnet, dass** das Einlegeteil (9) eine obere Auflagefläche (10) zur Anlage einer unteren Anlagefläche (11) der Gewindemutter (5) enthält.

3. Absperrelement (1) nach Anspruch 1 oder 2, **dadurch gekennzeichnet, dass** das Einlegeteil (9) in die Ummantelung (7) eingegossen ist.

4. Absperrelement (1) nach Anspruch 1 oder 2, **dadurch gekennzeichnet, dass** das Einlegeteil (9) in eine Vertiefung der Ummantelung (7) eingelegt oder eingelebt ist.

5. Absperrelement (1) nach einem der Ansprüche 1 bis 4, **dadurch gekennzeichnet, dass** das Einlegeteil (9) ein zu einer Durchgangsöffnung (3) des Grundkörpers (2) koaxiales Durchgangsloch (12) enthält.

6. Absperrelement (1) nach einem der Ansprüche 1 bis 5, **dadurch gekennzeichnet, dass** das Einlegeteil (9) aus einem verschleißbeständigen Kunststoff besteht.

7. Absperrelement (1) nach einem der Ansprüche 1 bis 6, **dadurch gekennzeichnet, dass** das Einlegeteil (9) aus glasfaserverstärktem Polyamid besteht.

8. Absperrelement (1) nach einem der Ansprüche 1 bis 7, **dadurch gekennzeichnet, dass** der Grundkörper (2) seitlich vorstehende Führungsansätze (6) enthält.

9. Absperrelement nach Anspruch 8, **dadurch gekennzeichnet, dass** auf den Führungsansätzen (6) Führungsschuhe (13) angeordnet sind.

10. Absperrelement nach Anspruch 9, **dadurch gekennzeichnet, dass** die Führungsschuhe (13) aus Kunststoff bestehen.

## Claims

1. Blocking element (1) for a blockingdevice having a base body (2), a housing (7) surrounding the base body (2) and a threaded nut (5) arranged in a mounting (4) of the base body (2), **characterised in that** an insert (9) embedded in the housing (7) and made of a wear-resistant material is arranged between the base body (2) and the threaded nut (5).

2. Blocking element (1) according to claim 1, **characterised in that** the insert (9) contains an upper supporting surface (10) for installing a lower contact surface (11) of the threaded nut (5).

3. Blocking element (1) according to claim 1 or 2, **characterised in that** the insert (9) is cast into the housing (7).

4. Blocking element (1) according to claim 1 or 2, **characterised in that** the insert (9) is inserted or settled into a depression of the housing (7).

5. Blocking element (1) according to one of claims 1 to 4, **characterised in that** the insert (9) contains a passage hole (12) which is coaxial to a passage opening (3) of the base body (2).

6. Blocking element (1) according to one of claims 1 to 5, **characterised in that** the insert (9) consists of a wear-resistant plastic.

7. Blocking element (1) according to one of claims 1 to 6, **characterised in that** the insert (9) consists of glass fibre-reinforced polyamide.

8. Blocking element (1) according to one of claims 1 to 7, **characterised in that** the base body (2) contains laterally projecting guide shoulders (6).

9. Blocking element according to claim 8, **characterised in that** guide shoes (13) are arranged on the guide shoulders (6).

10. Shut-off element according to claim 9, **characterised in that** the guide shoes (13) consist of plastic.

## Revendications

1. Elément de blocage (1) pour une robinetterie de blocage comprenant un corps de base (2), une gaine (7) entourant le corps de base (2) et un écrou fileté (5) disposé dans un logement (4) du corps de base (2), **caractérisé en ce qu'**une partie d'insertion (9) incorporée dans la gaine (7), composée d'un matériau résistant à l'usure est disposée entre le corps de base (2) et l'écrou fileté (5).

2. Elément de blocage (1) selon la revendication 1, **caractérisé en ce que** la partie d'insertion (9) contient une surface de réception (10) supérieure servant à l'appui d'une surface d'appui (11) inférieure de l'écrou fileté (5).

3. Elément de blocage (1) selon la revendication 1 ou 2, **caractérisé en ce que** la partie d'insertion (9) est coulée dans la gaine (7).

4. Elément de blocage (1) selon la revendication 1 ou 2, **caractérisé en ce que** la partie d'insertion (9) est insérée ou intégrée dans un évidement de la gaine (7) .

5. Elément de blocage (1) selon l'une quelconque des revendications 1 à 4, **caractérisé en ce que** la partie d'insertion (9) contient un trou de passage (12) coaxial par rapport à une ouverture de passage (3) du corps de base (2).

6. Elément de blocage (1) selon l'une quelconque des revendications 1 à 5, **caractérisé en ce que** la partie d'insertion (9) est constituée d'une matière plastique résistante à l'usure.

7. Elément de blocage (1) selon l'une quelconque des revendications 1 à 6, **caractérisé en ce que** la partie d'insertion (9) est constituée d'un polyamide renforcé par des fibres de verre

8. Elément de blocage (1) selon l'une quelconque des revendications 1 à 7, **caractérisé en ce que** le corps de base (2) contient des épaulements de guidage (6) faisant saillie latéralement.

9. Elément de blocage selon la revendication 8, **caractérisé en ce que** des patins de guidage (13) sont disposés sur les épaulements de guidage (6).

10. Elément de blocage selon la revendication 9, **caractérisé en ce que** les patins de guidage (13) sont constitués d'une matière plastique.
